Europäisches Patentamt

European Patent Office

Office européen des brevets

(11) Veröffentlichungsnummer: **0 152 753**
**B1**

(12) **EUROPÄISCHE PATENTSCHRIFT**

(45) Veröffentlichungstag der Patentschrift:
21.09.88

(21) Anmeldenummer: **85100303.8**

(22) Anmeldetag: **14.01.85**

(51) Int. Cl.⁴: **F 16 L 47/00**, F 16 L 23/00

---

(54) **Flanschverbindung für faserverstärkte Kunststoffrohrteile.**

---

(30) Priorität: **20.02.84 CH 802/84**

(43) Veröffentlichungstag der Anmeldung:
**28.08.85 Patentblatt 85/35**

(45) Bekanntmachung des Hinweises auf die Patenterteilung:
**21.09.88 Patentblatt 88/38**

(84) Benannte Vertragsstaaten:
**AT BE CH DE FR GB IT LI LU NL SE**

(56) Entgegenhaltungen:
**DE-A-2 011 513**
**FR-A-1 066 132**
**FR-A-2 037 666**
**GB-A-836 825**

**CHEMIE-INGENIEUR-TECHNIK, Band 25, Nr. 6, 1953, Seite 342, Weinheim, DE; "Rohrverbindungen beim Panzerrohr"**

(73) Patentinhaber: **GEORG FISCHER AKTIENGESELLSCHAFT, Mühlentalstrasse 105, CH- 8201 Schaffhausen (CH)**

(72) Erfinder: **Overath, Friedhelm, Kohlfirststrasse 13, CH- 8203 Schaffhausen (CH)**
Erfinder: **Saner, Remo, Bodenackerstrasse 487, CH- 4227 Büsserach (CH)**

## Beschreibung

Die Erfindung betrifft eine Flanschverbindung von Rohrteilen wie sie im Oberbegriff von Anspruch 1 gekennzeichnet ist.

Für die Weiterleitung von Medien insbesonders von aggressiven Medien in der chemischen Industrie werden Rohrleitungen mit einem inneren Mantel aus einem thermoplastischem Material wie z. B. aus Polyäthylen, Polypropylen, Polyvinylchlorid usw. und einem äusseren Mantel aus einem faserverstärkten Laminat wie z. B. gewickelte Glasfasern mit einem ungesättigten Polyesterharz oder Epoxyd-Harz getränkt, verwendet. Der äussere Laminat-Mantel dient zur Verstärkung der Rohre, um Medien mit höheren Drücken weiterleiten zu können, als auch zur Aufnahme von äusseren Kräften, wie z. B. von Zug-Druck oder Biegekräften auf die Rohrleitung.

Bei der Herstellung von lösbaren Verbindungen zwischen den Rohren bzw. zwischen Rohren und Fittings, wie z. B. Winkel, T-Stücke oder Reduktionen, ist es wichtig, dass das Medium nicht mit dem äusseren Mantel in Berührung kommt und die äusseren Kräfte im wesentlichen durch den äusseren Mantel weitergeleitet werden.

In der DE-A-2 813 599 ist ein verfahren zur Anformung eines Flansches bei faserverstärkten Kunststoffrohrteilen beschrieben, wobei der Flansch zur Erstellung einer lösbaren Verbindung mit Löchern versehen ist.

Das Anformen derartiger Flansche kann nicht erst beim Verlegen der Rohrleitungen am Verlegungsort erfolgen, sondern muss beim Hersteller im Betrieb von entsprechenden Fachleuten bei dafür erforderlichen Umgebungstemperaturen mit aufwendigen Vorrichtungen durchgeführt werden. Mit jeweils beliebigen Rohrlängen kann mit diesem Verfahren auf der Baustelle keine Flanschverbindung hergestellt werden.

Durch die FR-A-2 037 666 ist eine Flanschverbindung für mit Elastomer ausgekleideten glasfaserverstärkten Kunststoffrohren bekannt geworden, welche einen durch Schlitze verformbaren Klemmring aus Stahl, einen mit einem Aussenkonus versehenen Dichtring aus einem Elastomer, der einen mit einem Innenkonus und einem Bund versehenen Stahlflansch aufweist. Die Teile sind sehr aufwendig in der Herstellung, wobei neben der Klemmverbindung des Klemmringes mit dem Rohr zusätzliche Klebeverbindungen zwischen dem Dichtring und dem Klemmring einerseits und dem Stahlflansch andererseits erforderlich sind und bzw. oder diese Teile durch Vulkanisieren miteinander verbunden werden.

Weiterhin ist eine in der Zeitschrift "Chemie-Ing.-Technik", Band 25, Nr. 6, 1953 auf Seite 342, "Rohrverbindungen beim Panzerrohr", dargestellte Flanschverbindung der eingangs genannten Art bekanntgeworden, deren metallische Bundbuchse mit dem äusseren Metallmantel des Kunststoff rohres durch Kleben verbunden ist. Klebeverbindungen müssen sehr sorgfältig ausgeführt werden und gewährleisten keine hohe Sicherheit gegen Abscheren bei axialen Kräften.

Aufgabe der vorliegenden Erfindung ist die Schaffung einer Flanschverbindung von Rohrteilen der eingangs genannten Art, welche die genannten Voraussetzungen betreffend der Weiterleitung der Kräfte und der mit dem Durchflussmedium in Berührung kommenden Flächen erfüllt.

Erfindungsgemäß wird dies durch die kennzeichnenden Merkmale von Anspruch 1 gelöst.

Besonders vorteilhafte Ausgestaltungen der Erfindung sind in den abhängigen Ansprüchen gekennzeichnet.

Durch die erfindungsgemäßen Merkmale wird erreicht, dass die Spannkräfte der Flanschverbindung formschlüssig auf den äusseren Mantel der zu verbindenden Teile übertragen werden. Durch die Verwendung eines Rundgewindes werden Kerbwirkungen weitgehend vermieden, wobei die Verbindung sofort nach Montage belastbar ist. Die Herstellung der Bundbuchse, ebenfalls aus faserverstärktem Material, ergibt eine leichte und korrosionsfeste Verbindung.

Durch die zusätzliche Klebung zwischen Bundbuchse und äusserem Material ist eine Sicherung gegen Lösen gegeben, wobei durch das Ausfüllen eventuell vorhandener Hohlräume mit Klebstoff eine Verhinderung von Permeationsschäden bewirkt.

Durch die Ausbildung des Ringflansches als Norm-Flansch sind diese faserverstärkten Kunststoffrohrteile an andere Systeme bzw. auch Ventile anschliessbar, wobei geringe Winkelfehler beim Anschluss zulässig sind.

Die Flanschverbindung ist direkt an der Montagestelle herstellbar, ohne dass eine Vorfertigung von Passlängen im Werk erforderlich ist.

Durch entsprechende Wahl des thermoplastischen Materials für den inneren Mantel und den Abdeckring ist eine hohe chemische Beständigkeit der Flanschverbindung gegeben.

Die Erfindung ist in den bei liegenden Zeichnungen beispielsweise dargestellt und nachfolgend beschrieben.

Es zeigen:

Fig. 1 einen Teillängsschnitt einer Flanschverbindung für faserverstärkte Rohrteile,

Fig. 2 eine Ausführungsvariante in einem Teilausschnitt von Fig. 1 und

Fig. 3 eine weitere Ausführungsvariante in einem Teilausschnitt von Fig. 2.

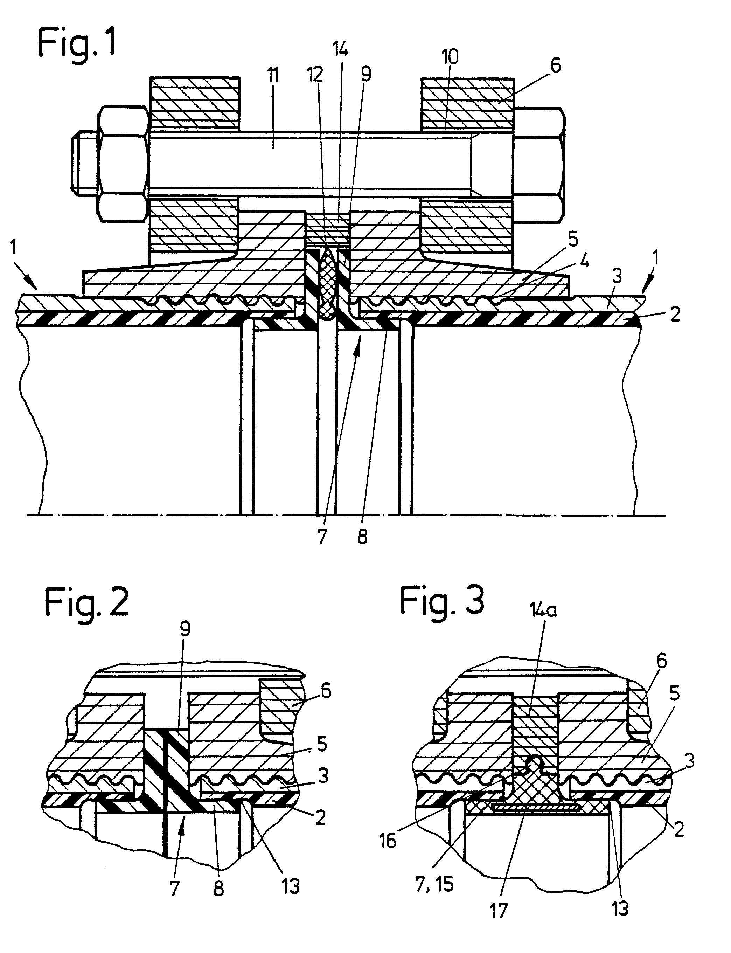

Fig. 1 zeigt eine lösbare Flanschverbindung zwischen zwei rohrförmigen Teilen 1, welche z. B. ein Leitungsrohr, ein Fitting wie z. B. ein Bogen, Winkel, T-Stück oder Reduktionsmuffe oder das Ausschlussende einer Armatur sein können.

Das rohrförmige Teil 1 weist einen inneren Mantel 2 aus einem thermoplastischem Material wie z. B, Polyäthylen, Polyvinylchlorid usw. und einen äusseren Mantel 3 auf, welcher aus einer mit Kunstharz getränkten Faserwicklung besteht. Vorzugsweise wird ein Laminat aus Glasfasern mit einem ungesättigten Polyesterharz oder Epoxyd-Harz verwendet.

Der äussere Mantel wird auf fertig extrudierte Rohre bzw. vorgefertigten wie z. B. gespritzten Fittings durch einen Laminiervorgang aufgebracht und ist mit dem inneren Mantel durch Adhäsion fest verbunden.

Das Ende des rohrförmigen Teiles 1 ist mit einem Gewinde 4, vorzugsweise einem Rundgewinde versehen, welches z. B. nach dem Abschneiden des Rohres auf die gewünschte Länge durch eine mechanische Bearbeitung anbringbar ist. Selbstverständlich sind auch andere Gewindeformen möglich.

Auf das Ende des rohrförmigen Teiles 1 ist eine mit einem losen Flanschring 6 versehene Bundbüchse 5 aufgeschraubt. Bundbuchse 5 und Flanschring 6 sind ebenfalls aus einem Laminat - vorzugsweise aus Glasfasern und Kunstharz - hergestellt.

Vorteilhafterweise wird die Bundbuchse 5 zusätzlich zu der formschlüssigen Verbindung noch mit einer Klebe-Verbindung mit dem rohrförmigen Teil 1 fest verbunden.

Ein Abdeckring 7 ist mit seiner zylindrischen Partie 8 mit dem inneren Mantel 2 fest und dicht verbunden und überdeckt mit seiner Flanschpartie 9 das Ende des rohrförmigen Teiles 1 und teilweise die Stirnfläche der Bundbuchse 5. Der Abdeckring 7 besteht vorzugsweise aus dem gleichen thermoplastischen Material wie der innere Mantel 2 und ist mit diesem in einer zentrierenden Ausnehmung verschweisst oder verklebt.

Mittels in Durchgangslöchern 10 angeordneten Schraubverbindungen 11 wird eine lösbare Verbindung mit einem zweiten, gleich ausgebildeten rohrförmigen Teil 1 hergestellt, wobei zwischen den Stirnseiten der Abdeckringe 7 eine Dichtung 12 aus einem gegenüber dem Durchflussmedium beständigen elastischen Material angeordnet ist. Zusätzlich kann am Aussenumfang der Dichtung 12 zwischen den Bundbuchsen 5 ein die Kompression der der Dichtung 12 festlegender Distanzring 14 angeordnet werden, welcher z. B. auch aus einem Glasfaser-Laminat hergestellt sein kann.

Bei der in Fig. 2 dargestellten Ausführungsvariante sind die Abdeckringe 7 gleichzeitig als Dichtung ausgebildet. Hierbei sind die aus einem thermoplastischem Material hergestellten Abdeckringe 7 mit der zylindrischen Partie 8 in einer Ausdrehung 13 des inneren Mantels 2 eingeschweisst oder eingeklebt, wobei die Dichtfläche der Flanschpartie 9 eine entsprechend feine Oberfläche aufweisen und plan verlaufen muss.

Bei der in Fig. 3 gezeigten Ausführungsvariante wird in die Ausdrehungen 13 des inneren Mantels 2 ein einteiliger, als Dichtring 15 ausgebildeter Abdeckring 7 eingesteckt, wobei die Abdichtung gegen den Austritt des Durchflussmediums im wesentlichen an den zylindrischen Umfangsflächen zwischen dem Dichtring 15 und den Ausdrehungen 13 des inneren Mantels 2 erfolgt. Ein Distanzring 14a ist am Aussenumfang des Dichtringes 15 mittels einer Steckverbindung 16 befestigt.

Zur Versteifung und Verbesserung der Dichtwirkung kann in dem aus einem Elastomer hergestellten Dichtring 15 ein, vorzugsweise metallischer Versteifungsring 17 angeordnet sein.

**Patentansprüche**

1. Flanschverbindung von Rohrteilen (1), welche einen inneren Mantel (2) aus einem thermoplastischem Material und einen äusseren Mantel (3) aufweisen, wobei am äusseren Mantel (3) am Ende der jeweiligen zu verbindenden rohrförmigen Teile (1) eine mit einem losen Flanschring (6) versehene Bundbuchse (5) angeordnet ist und am inneren Mantel (2) ein, mindestens teilweise die Stirnseite der Bundbuchse (5) überdeckender Abdeckring (7), eingesetzt ist, dadurch gekennzeichnet, dass der äussere Mantel aus einer mit Kunstharz getränkten Faserwicklung besteht, dass die Bundbuchse (5) mittels eines Rundgewindes (4) am äusseren Mantel (3) formschlüssig befestigt ist, und dass die Bundbuchse (5) aus mit Kunstharz getränkten Fasermatten besteht.

2. Flanschverbindung nach Anspruch 1, dadurch gekennzeichnet, dass die Bundbuchse (5) im Gewinde (4) mittels einer Klebeverbindung mit dem Rohrteil (1) fest verbunden ist.

3. Flanschverbindung nach einem der Ansprüche 1 oder 2, dadurch gekennzeichnet, dass der Flanschring (6) aus mit Kunstharz getränkten Fasermatten besteht.

4. Flanschverbindung nach einem der Ansprüche 1 bis 3, dadurch gekennzeichnet, dass die Faserwicklung bzw. Fasermatten aus Glasfaser bestehen.

5. Flanschverbindung nach einem der Ansprüche 1 bis 4, dadurch gekennzeichnet, dass der Abdeckring (7) gleichzeitig als Dichtring (15) ausgebildet aus einem Elastomer hergestellt ist und in den inneren Mantel (2) mediumsdicht eingesteckt ist.

6. Flanschverbindung nach einem der Ansprüche 1 bis 5, dadurch gekennzeichnet, dass zwischen den Stirnseiten der Bundbuchsen (5) ein Distanzring (14, 14a) eingelegt ist.

**Claims**

1. Flange connection of pipe parts (1), which have an inner casing (2) of a thermoplastic material and an outer casing (3) wherein on the outer casing (3) at the end of the respective tubular parts (1) to be joined there is arranged a flange bushing (5) provided with a loose flange ring (6), and a covering ring (7) at least partially covering the front face of the flange bushing (5) is inserted on the inner casing (2), characterised in that the outer casing is of a fibre coating saturated with plastic resin, that the flange bushing (5) is secured in form-fitting manner on the outer casing by means of a round thread (4), and in that the flange bushing (5) comprises fibre mats saturated with plastic resin.

2. Flange connection according to claim 1, characterised in that the flange bushing (5) in the thread (4) is fixedly connected by means of an adhesive connection to the pipe part (1).

3. Flange connection according to one of claims 1 or 2, characterised in that the flange ring (6) is made of fibre mats saturated with plastic resin.

4. Flange connection according to one of claims 1 to 3, characterised in that the fibre coating or fibre mats are of glass fibres.

5. Flange connection according to one of claims 1 to 4, characterised in that the covering ring (7), formed at the same time as a sealing ring (15), is made of an elastomer and is inserted into the inner casing (2) so as to seal against the medium.

6. Flange connection according to one of claims 1 to 5, characterised in that a spacer (14, 14a) is inserted between the front faces of the flange bushings (5).

**Revendications**

1. Assemblage par brides de pièces tubulaires (1) qui présentent une enveloppe intérieure (2) en une matière thermoplastique et une enveloppe extérieure (3), une douille épaulée (5) munie d'un anneau-bride libre (6) étant agencée sur l'enveloppe extérieure (3), à l'extrémité de chacune des pièces tubulaires (1) à assembler, et un anneau de recourvrement (7) recouvrant au moins partiellement la face frontale de la douille épaulée (5) étant inséré dans l'enveloppe intérieure, caractérisé par le fait que l'enveloppe extérieure est constituée par un enroulement de fibres imprégné de résine synthétique, par le fait que la douille épaulée (5) est fixée avec conjugaison de formes à l'enveloppe extérieure (3) au moyen d'un filetage à filet rond (4), et par le fait que la douille épaulée (5) est constituée par des mats de fibres imprégnés de résine plastique.

2. Assemblage par brides selon revendication 1, caractérisé par le fait que la doulle épaulée (5) est inamoviblement liée à la pièce tubulaire (1) à l'endroite du filetage (4) au moyen d'un assemblage collé.

3. Assemblage par brides selon l'une des revendications 1 ou 2, caractérisé par le fait que l'anneau-bride (6) est constitué par des mats de fibres imprégnés de résine sythétique.

4. Assemblage par brides selon l'une des revendications 1 à 3, caractérisé par le fait que l'enroulement de fribres et les mats de fibres sont constitués par des fibres de verre.

5. Assemblage par brides selon l'une des revendications 1 à 4, caractérisé par le fait que l'anneau de recouvrement (7), réalisé en même temps en tant qu'anneau d'étanchéité (15), est en un élastomère et est inséré, avec étanchéité aux fluides, dans l'enveloppe intérieure (2).

6. Assemblage par brides selon l'une des revendications 1 à 5, caractérisé par le fait qu'un anneau d'espacement (14, 14a) est placé entre les faces frontales des douilles épaulées (5).

Fig.1

Fig. 2

Fig. 3